# EUROPEAN PATENT APPLICATION

(11) **EP 4 823 166 A1**
(43) Date of publication of application: **14.10.2026**
(21) Application number: 25742073.7
(22) Date of filing: 13.01.2025
(51) Int. Cl.: H04W 28/02, H04W 28/14, H04W 88/08

(54) **ELECTRONIC DEVICE AND METHOD FOR CONTROLLING CONGESTION IN WIRELESS COMMUNICATION SYSTEM**

(30) Priority: 21.01.2024 KR 20240009180; 08.02.2024 KR 20240019857
(71) Applicant: Samsung Electronics Co., Ltd., Suwon-si, Gyeonggi-do 16677 (KR)
(72) Inventor: BYEON, Seongho, Suwon-si, Gyeonggi-do 16677 (KR); KANG, Seongryong, Suwon-si, Gyeonggi-do 16677 (KR); CHOI, Kwangjin, Suwon-si, Gyeonggi-do 16677 (KR); HAN, Younggoo, Suwon-si, Gyeonggi-do 16677 (KR); SUNG, Yoonyoung, Suwon-si, Gyeonggi-do 16677 (KR); SHIN, Junhwan, Suwon-si, Gyeonggi-do 16677 (KR); LEE, Janghee, Suwon-si, Gyeonggi-do 16677 (KR); HA, Sukjong, Suwon-si, Gyeonggi-do 16677 (KR)
(74) Representative: Gulde & Partner
(86) International application number: PCT/KR2025/000761
(87) International publication number: WO 2025/155057

(57) **Abstract**

According to an embodiment, a method performed by a device of a central unit (CU) comprises an operation of receiving, through a transceiver, a message indicating a transmission state of downlink data from a distributed unit (DU) connected to the CU. The method comprises an operation of determining, on the basis of the message, a probability that an explicit congestion notification (ECN) field is displayed as a specified value indicating congestion. The method comprises an operation of marking an ECN field of at least one packet from among packets, which are transmitted from the CU to the DU, with the specified value, according to the probability.

## Description

### [Technical Field]

The present disclosure relates to a wireless communication system. More specifically, the present disclosure relates to an electronic device and a method for controlling congestion in the wireless communication system.

### [Background Art]

Low latency low loss scalable throughput (L4S) is a technology for alleviating a queue delay problem that may occur in network equipment disposed in an end-to-end (E2E) between a server (e.g., an application server) and a client. In a case that the L4S is applied, a low latency performance for an internet protocol flow may be guaranteed without affecting a throughput performance.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, a device of a central unit (CU) may comprise a transceiver, at least one processor comprising processing circuitry, and memory, comprising one or more storage mediums, storing instructions. The instructions, when executed by the at least one processor individually or collectively, cause the device to receive, through the transceiver, a message indicating a downlink data delivery status from a distributed unit (DU) connected with the CU. The instructions, when executed by the at least one processor individually or collectively, cause the device to determine, based on the message, a probability that an explicit congestion notification (ECN) field is to be displayed as a designated value indicating congestion. The instructions, when executed by the at least one processor individually or collectively, cause the device to perform a marking for an ECN filed of at least one packet among packets transmitted from the CU to the DU with the designated value, according to the probability.

According to an embodiment, a method performed by a device of a central unit (CU) may comprise receiving, through a transceiver, a message indicating a downlink data delivery status from a distributed unit (DU) connected with the CU. The method may comprise determining, based on the message, a probability that an explicit congestion notification (ECN) field is to be displayed as a designated value indicating congestion. The method may comprise performing a marking for an ECN filed of at least one packet among packets transmitted from the CU to the DU with the designated value, according to the probability.

According to an embodiment, a non-transitory computer readable storage medium may store one or more programs. The one or more programs may comprise instructions, which, when executed by a processor of an electronic device of a central unit (CU), may cause the electronic device to receive, through a transceiver, a message indicating a downlink data delivery status from a distributed unit (DU) connected with the CU. The one or more programs may comprise instructions, which, when executed by the processor of the electronic device, may cause the electronic device to determine, based on the message, a probability that an explicit congestion notification (ECN) field is to be displayed as a designated value indicating congestion. The one or more programs may comprise instructions, which, when executed by the processor of the electronic device, may cause the electronic device to perform a marking for an ECN filed of at least one packet among packets transmitted from the CU to the DU with the designated value, according to the probability.

### [Description of the Drawings]

FIG. 1A to FIG. 1B illustrate examples of a wireless communication system.
FIG. 2A illustrates examples of a control plane (C-plane).
FIG. 2B illustrates examples of a user plane (U-plane).
FIG. 3A, FIG. 3B, and FIG. 3C illustrate examples of a function split according to a communication protocol.
FIG. 4 illustrates an example of signaling between a central unit (CU) and a distributed unit (DU).
FIG. 5 illustrates an example in which information on a DU is transmitted to a CU.
FIG. 6 illustrates an example of an operation of a CU for performing an ECN marking.
FIG. 7 illustrates an ECN marking probability according to a buffering delay.
FIG. 8A and FIG. 8B illustrate an example of information transmitted to a core network.
FIG. 9 is a flowchart of an operation of an electronic device for performing a marking for an ECN field.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In the following description, terms referring to a signal (e.g., signal, information, message, signaling), terms referring to a data type (e.g., list, set, subset), terms referring to a calculation state (e.g., step, operation, procedure), terms referring to data (e.g., packet, user stream, information, bit, symbol, codeword), terms referring to a resource (e.g., symbol, slot, subframe, radio frame, subcarrier, resource element (RE), resource block (RB), bandwidth part (BWP), occasion), terms referring to a channel, terms referring to network entities, terms referring to a component of a device, and the like, are illustrated for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments using terms used in certain communication standards (e.g., 3rd Generation Partnership Project (3GPP), European Telecommunications Standards Institute (ETSI), extensible radio access network (xRAN), and open-radio access network (O-RAN)), but which is merely an example for description. Various embodiments of the present disclosure may be easily modified and applied in another communication system.

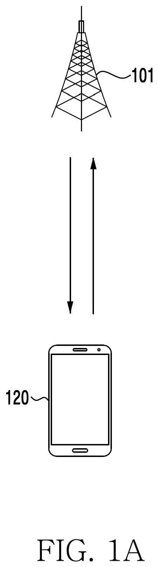

FIG. 1A to FIG. 1B illustrate examples of a wireless communication system.

Referring to FIG. 1A, FIG. 1A illustrates a base station 101 and a terminal 120 as a part of nodes using a wireless channel in the wireless communication system. Although FIG. 1A illustrates only one base station, the wireless communication system may further include another base station identical or similar to the base station 101.

The base station 101 is a network infrastructure providing wireless access to the terminal 120. The base station 101 has coverage defined based on a distance over which a signal may be transmitted. The base station 101 may be referred to as an 'access point (AP)', an 'eNodeB (eNB)', a '5th generation node (5G node)', a 'next generation nodeB (gNB)', a 'wireless point', a 'transmission/reception point (TRP)', or another term having an equivalent technical meaning, in addition to a base station.

The terminal 120 is a device used by a user and performs communication with the base station 101 through a wireless channel. A link from the base station 101 to the terminal 120 is referred to as a downlink (DL), and a link from the terminal 120 to the base station 101 is referred to as an uplink (UL). In addition, although not illustrated in FIG. 1A, the terminal 120 and another terminal may perform communication with each other through a wireless channel. In this case, a link between the terminal 120 and the another terminal (device-to-device link (D2D)) is referred to as a sidelink, and the sidelink may be used interchangeably with a PC5 interface. In some other embodiments, the terminal 120 may be operated without user involvement. According to an embodiment, the terminal 120, which is a device performing machine type communication (MTC), may not be carried by a user. In addition, according to an embodiment, the terminal 120 may be a narrowband (NB)-internet of things (IoT) device.

The terminal 120 may be referred to as 'user equipment (UE)', 'customer premises equipment (CPE)', a 'mobile station', a 'subscriber station', a 'remote terminal', a 'wireless terminal', an 'electronic device', a 'user device', or another term having an equivalent technical meaning, in addition to a terminal.

The base station 101 may perform beamforming with the terminal 120. The base station 101 and the terminal 120 may transmit and receive wireless signals in a relatively low frequency band (e.g., frequency range 1 (FR 1) of NR). In addition, the base station 101 and the terminal 120 may transmit and receive wireless signals in a relatively high frequency band (e.g., FR 2 (or FR 2-1, FR 2-2, FR 2-3) or FR 3 of NR), or a millimeter wave (mmWave) band (e.g., 28GHz, 30GHz, 38GHz, 60GHz). In order to improve channel gain, the base station 101 and the terminal 120 may perform beamforming. Herein, the beamforming may include transmission beamforming and reception beamforming. The base station 101 and the terminal 120 may provide directivity to a transmission signal or a reception signal. To this end, the base station 101 and the terminal 120 may select serving beams through a beam search or beam management procedure. After the serving beams are selected, subsequent communication may be performed through a resource in a QCL relationship with a resource that transmitted the serving beams.

The terminal 120 may be configured with cells of the base station 101 and carrier aggregation (CA). The CA technology is a technology for increasing frequency usage efficiency of the terminal 120 and the base station 101 by connecting the terminal to a homogeneous wireless communication cell group having a common radio resource control entity and simultaneously using frequency resources on a component carrier (CC) of each cell located in different frequency bands for signal transmission and reception. Cells configured for the CA may include one primary cell (PCell) and one or more secondary cells (SCells).

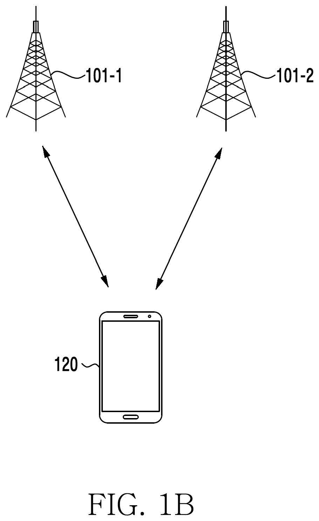

Referring to FIG. 1B, the terminal 120 may be configured in dual connectivity (DC) using a first base station 101-1 and a second base station 101-2. The DC technology is a technology for increasing frequency usage efficiency by connecting the terminal simultaneously to two independent heterogeneous or homogeneous wireless communication cell groups having separate radio resource control entities and using frequency resources on a component carrier of a cell in each cell group located in different frequency bands for signal transmission and reception. The DC technology is a technology for the terminal 120 to be connected to two different radio resource entities (e.g., the first base station 101-1 and the second base station 101-2), and to use radio resources allocated by each radio resource entity. In MR-DC, a UE (e.g., the terminal 120) in a radio resource control (RRC) connected state (i.e., RRC_CONNECTED) may be configured to use radio resources provided by two independent schedulers. Each scheduler may be located in an NG-RAN node (e.g., the first base station 101-1 or the second base station 101-2). Herein, one node is a master node (MN) and another node is a secondary node (SN). The MN and the SN may be connected through a network interface, and the MN may be connected to a core network. The SN may be connected or may not be connected to the core network.

The MN may provide a master cell group (MCG). The MN may be referred to as an M-NODE or an M-NG-RAN node in addition to the MN. The MCG may include one or more cells. The MCG may include a primary cell (PCell). The MCG may include a plurality of aggregated cells. The MCG may include the PCell and one or more SCells. The SN may provide a secondary cell group (SCG). The SN may be referred to as an S-NODE or an S-NG-RAN node in addition to the SN. The SCG may include one or more cells. The SCG may include a plurality of aggregated cells. Like the MCG, the SCG may include a PCell and/or an SCell. A cell functioning as a PCell within the SCG may be referred to as a primary secondary cell (PSCell). A secondary cell group may include the PSCell and one or more SCells. Hereinafter, a special cell (SpCell) may be used as a term including the PCell and the PSCell. The SpCell means a primary cell of the MCG or the SCG. In other words, the SpCell of the MCG refers to the PCell, and the SpCell of the SCG refers to the SCell.

Possible types of DC may be defined as follows.
1) EN-DC: Dual connectivity in which an eNB is connected to an evolved packet core (EPC), and the terminal is connected to an eNB acting as the MN and a gNB acting as the SN. Herein, the gNB may be referred to as an en-gNB, and the en-gNB may be connected or may not be connected to the EPC.
2) NGEN-DC: Dual connectivity in which an eNB is connected to a 5G core (5GC), and the terminal is connected to an eNB acting as the MN and a gNB acting as the SN. Herein, the eNB may be referred to as an ng-eNB.
3) NE-DC: Dual connectivity in which a gNB is connected to the 5GC, and the terminal is connected to a gNB acting as the MN and an eNB acting as the SN. Herein, the eNB may be referred to as an ng-eNB.
4) NR-DC: Dual connectivity in which gNBs are connected to the 5GC, and the terminal is connected to a gNB acting as the MN and a gNB acting as the SN. NR-DC may be used even in a case that the UE performs roles of both the MN and the SN and configures both the MCG and the SCG by being connected to a single gNB.

The terminal 120 may support multi-radio (MR)-DC. The terminal 120 may be connected to the first base station 101-1 and the second base station 101-2. The first base station 101-1 is the MN and the second base station 101-2 is the SN, and may be connected to the terminal. Together with carrier aggregation (CA) provided by each base station, the DC technology may provide a higher data rate. The first base station 101-1 and the second base station 101-2, as the MN and the SN, respectively, may transmit downlink traffic to the terminal 120 or receive uplink traffic from the terminal 120.

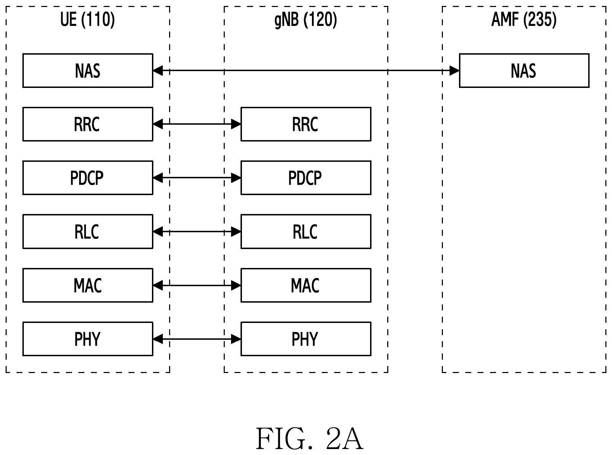

FIG. 2A illustrates examples of a control plane (C-plane).

Referring to FIG. 2A, in the C-plane, a UE 110 and an AMF 235 may perform non-access stratum (NAS) signaling. In the C-plane, the UE 110 and a gNB 120 may perform communication according to protocols specified in an RRC layer, a PDCP layer, an RLC layer, a MAC layer, and a PHY layer, respectively.

Main functions of the RRC layer may include at least some of the following functions.
- Broadcasting of system information related to an access stratum (AS) and the NAS
- Paging initiated by a 5G core (5GC) or a Next Generation-Radio Access Network (NG-RAN)
- Establishment, maintenance, and release of an RRC connection between the UE and the NG-RAN, including the following, and more specifically, including control for the RLC, the MAC, and the PHY:
   - Addition, modification, and release of Carrier Aggregation
   - Addition, modification, and release of dual connectivity between NR or E-UTRA and NR.
- Security function including key management;
- Establishment, configuration, maintenance, and release of a Signaling Radio Bearer (SRB) and a Data Radio Bearer (DRB)
- Mobility function including the following:
   - Handover and context transfer;
   - UE cell selection and reselection and control of the cell selection and the reselection;
   - Inter-RAT mobility.
- Quality of Service (QoS) management function;
- UE measurement reporting and control of the reporting;
- Detection and recovery of a radio link failure
- Transfer of a message to/from the NAS from/to the UE.

Main functions of the PDCP layer may include at least some of the following functions.
- Header compression and decompression function (Header compression and decompression: ROHC only)
- User data transfer function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU discard function (Timer-based SDU discard in uplink.)

Main functions of the RLC layer may include at least some of the following functions.
- Data transfer function (Transfer of upper layer PDUs)
- Sequential delivery function (In-sequence delivery of upper layer PDUs)
- Non-sequential delivery function (Out-of-sequence delivery of upper layer PDUs)
- ARQ function (Error Correction through ARQ)
- Concatenation, segmentation, and reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU discard function (RLC SDU discard)
- RLC re-establishment function (RLC re-establishment)

The MAC layer may be connected to a plurality of RLC layer devices configured in one terminal, and main functions of the MAC may include at least some of the following functions.
- Mapping function between logical channels and transport channels (Mapping between logical channels and transport channels)
- Multiplexing and demultiplexing function of MAC SDUs (Multiplexing/demultiplexing of MAC SDUs)
- Scheduling information reporting function (Scheduling information reporting)
- Error correction through HARQ function (Error correction through HARQ)
- Priority handling function between logical channels of one UE (Priority handling between logical channels of one UE)
- Priority handling function between terminals (Priority handling between UEs by means of dynamic scheduling)
- MBMS service identification function (MBMS service identification)
- Transport format selection function (Transport format selection)
- Padding function (Padding)

The physical layer may perform an operation of channel coding and modulating upper-layer data, and generating OFDM symbols from it, and transmitting them through a wireless channel, or demodulating and channel decoding OFDM symbols received through a wireless channel and delivering it to an upper layer.

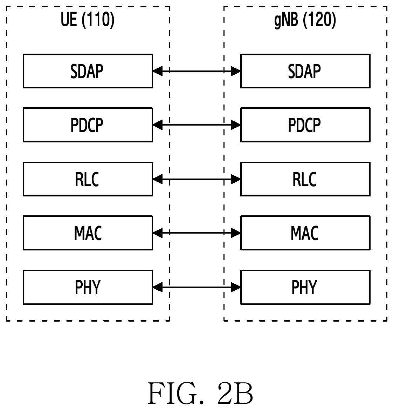

FIG. 2B illustrates examples of a user plane (U-plane).

Referring to FIG. 2B, in the U-plane, the UE 110 and the gNB 120 may perform communication according to protocols specified in an SDAP layer, the PDCP layer, the RLC layer, the MAC layer, and the PHY layer, respectively. For the PDCP layer, the RLC layer, the MAC layer, and the PHY layer, except for the SDAP layer, the description of FIG. 2A may be referred to.

The SDAP layer may provide a QoS flow of the 5GC. A single protocol entity of the SDAP may be configured for each individual PDU session, and functions of the SDAP layer may include at least some of the following function.
- Mapping between the QoS flow and the data radio bearer;
- Indication of a QoS flow identifier (QFI) in both DL and UL packets.

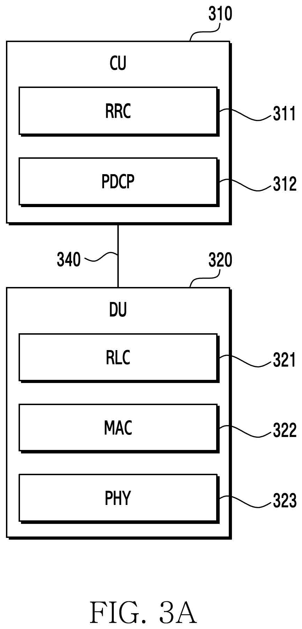

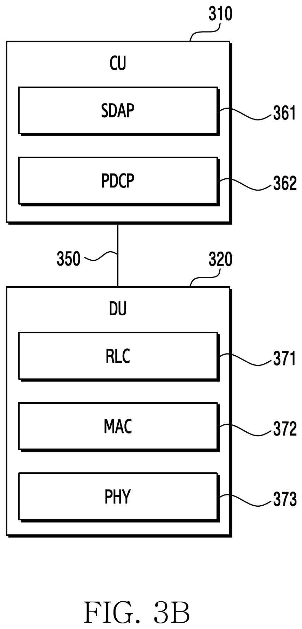

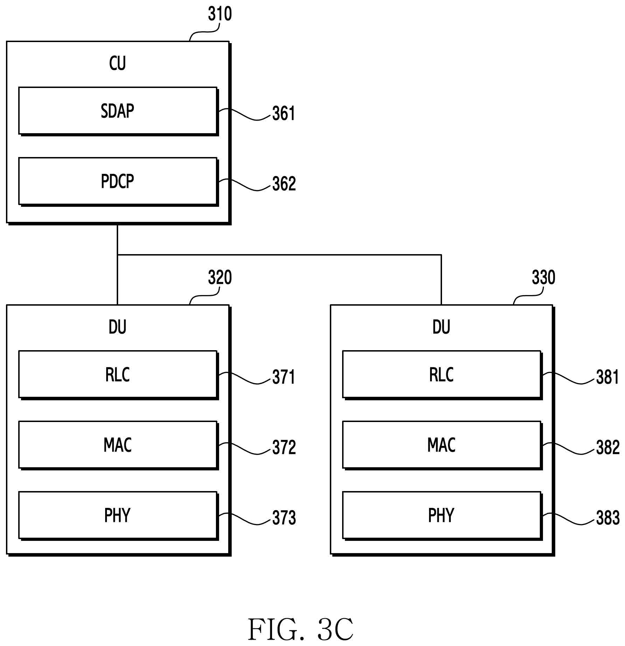

FIGS. 3A, 3B, and 3C illustrate examples of function split according to a communication protocol. A base station (e.g., the base station 101 of FIG. 1A) may operate as an eNB or a gNB according to a radio access technology (RAT) that it provides. For example, the base station may be referred to as an NG-RAN node. The base station may be implemented in a distributed deployment according to a central unit (CU) configured to perform functions of upper layers of an access network (e.g., packet data convergence protocol (PDCP) and radio resource control (RRC)) and a distributed unit (DU) configured to perform functions of lower layers.

Referring to FIG. 3A, in a control plane, a CU 310 may be connected to one or more DUs (e.g., a DU 320) and may be in charge of a function of a layer higher than that of the DU. For example, the CU 310 may be in charge of functions of an RRC layer 311 and a PDCP layer 312. The CU 310 may transmit a message or receive a message through an F1 interface 340 with the DU 320. In the control plane, the DU 320 may be in charge of functions of an RLC layer 321, a MAC layer 322, and a PHY layer 323. For a description of functions of the RRC layer 311 of the CU 310, a description of the RRC layer in FIG. 2A may be referred to. For a description of functions of the PDCP layer 312 of the CU 310, a description of the PDCP layer in FIG. 2A may be referred to. For a description of functions of the RLC layer 321 of the DU 320, a description of the RLC layer in FIG. 2A may be referred to. For a description of functions of the MAC layer 322 of the DU 320, a description of the MAC layer in FIG. 2A may be referred to. For a description of functions of the PHY layer 323 of the DU 320, a description of the PHY layer in FIG. 2A may be referred to. The DU 320 may, through the PHY layer 323, perform an operation of channel coding and modulating upper-layer data, and generating OFDM symbols from it and transmitting them through a wireless channel, or demodulating and channel decoding OFDM symbols received through a wireless channel and delivering it to an upper layer.

Referring to FIG. 3B, in a user plane, the CU 310 may be connected to one or more DUs (e.g., the DU 320) and may be in charge of a function of a layer higher than that of the DU. For example, the CU 310 may be in charge of functions of an SDAP layer 361 and a PDCP layer 362. The CU 310 may transmit a message or receive a message through an F1 interface 350 (e.g., F1-U) with the DU 320. The CU 310 may be referred to as a node hosting a PDCP entity for the PDCP layer 362 in terms of performing functions for the PDCP layer 362. The DU 320, as a node interacting with a node hosting the PDCP entity for flow control, may be referred to as the corresponding node. In the user plane, the DU 320 may be in charge of functions of an RLC layer 371, a MAC layer 372, and a PHY layer 373. For a description of functions of the SDAP layer 361 of the CU 310, a description of the SDAP layer of FIG. 2B may be referred to. For a description of functions of the PDCP layer 362 of the CU 310, a description of the PDCP layer of FIG. 2B may be referred to. For a description of functions of the RLC layer 321 of the DU 320, a description of the RLC layer of FIG. 2B may be referred to. For a description of functions of the MAC layer 322 of the DU 320, a description of the MAC layer of FIG. 2B may be referred to. For a description of functions of the PHY layer 323 of the DU 320, a description of the PHY layer of FIG. 2B may be referred to.

Referring to FIG. 3C, an example of a protocol layer of the user plane in dual connectivity is illustrated. Different DUs (e.g., the DU 320 and a DU 330) may be connected to one CU 310. Separate from the DU 320, the DU 330 may include an RLC entity for an independent RLC layer 381 and a MAC entity for a MAC layer 382. The DU 330 may provide an access network distinguished from an access network of the DU 320 to a UE (e.g., the terminal 120). In terms of the UE, two separate MAC entities (e.g., a first MAC entity for the MAC layer 372 and a second MAC entity for the MAC layer 382) may indicate dual connectivity for the UE.

In FIGS. 3A, 3B, and 3C, a DU (e.g., the DU 320) is illustrated as being in charge of a physical layer (e.g., the physical layer 323 and the physical layer 373), but embodiments of the present disclosure are not limited thereto. According to an implementation example, the DU 320 may perform some functions of the physical layer (high PHY), and an RU connected to the DU 320 may be in charge of remaining functions of the physical layer (low PHY). In addition, as an example, a digital unit (DU) may be included in the distributed unit (DU) 320 according to a distributed deployment implementation of a base station. As a non-limiting example, the digital unit (DU) may refer to an entity including a CU and a distributed unit (DU) in a structure in which a CU, a distributed unit (DU), and an RU are disposed in sequence.

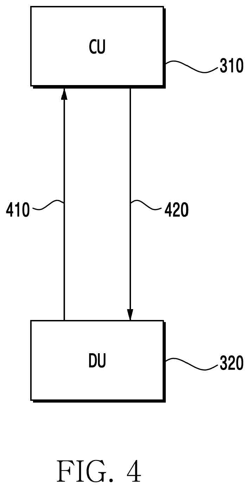

FIG. 4 illustrates an example of signaling between a central unit (CU) and a distributed unit (DU). In FIG. 4, in a user plane (U-plane), examples of messages on an F1 interface 350 (e.g., F1-U) between the CU 310 and the DU 320 are described. The same reference numerals described in the following specification may indicate the same descriptions.

Referring to FIG. 4, the CU 310 may transmit a status message 410 to the DU 320.

### 1. Transmission of Status Message

The CU 310 may transmit the status message 410 to the DU 320 through the F1 interface 350 (e.g., F1-U). According to an embodiment, the status message 410 may be used to provide a downlink data delivery status (DDDS) to the CU 310. A procedure for transmitting the status message 410 may allow the CU 310 to control a downlink user data flow of each data radio bearer (DRB) by providing feedback from the DU 320 to the CU 310. The procedure for transmitting the status message 410 may be used to provide feedback from the DU 320 to the CU 310 to allow the CU 310 to control successful delivery of downlink control data. As a non-limiting example, the DU 320 may deliver uplink user data of an associated data radio bearer to the CU 310 through the status message 410. At this time, a data radio bearer of the uplink user data and a radio bearer of the status message 410 may be associated with the same protocol data unit (PDU).

The status message 410 may include various information. For example, in an RLC acknowledged mode (AM), the status message 410 may include the highest NR PDCP PDU sequence number successfully delivered in sequence to a UE among PDCP PDUs received from the CU 310. Herein, among the PDUs, a retransmitted NR PDCP PDU may be excluded. For example, the status message 410 may include information on a desired buffer size for the corresponding data radio bearer or a multicast/broadcast service radio bearer (MRB). The desired buffer size may be indicated in units of bytes. For example, the status message 410 may optionally include information on a desired data rate associated with a specific data radio bearer configured for the UE or the MRB. The desired data rate may be indicated in units of bytes. A value indicated in the units of bytes may indicate a transmission amount per unit time (e.g., 1 second). For example, the status message 410 may include information on an NR-U packet declared as "lost" and not yet reported to the CU 310 within the status message 410 (e.g., a downlink data delivery status (DDDS) frame of Table 1). For example, in a case that a retransmitted NR PDCP PDU is delivered, the status message 410 may include information on an NR PDCP PDU sequence number associated with the highest NR-U sequence number among retransmitted NR PDCP PDUs successfully delivered to the UE in order of NR-U sequence numbers. For example, in a case that a retransmitted NR PDCP PDU is transmitted to a lower layer, the status message 410 may include information on an NR PDCP PDU sequence number associated with the highest NR-U sequence number among retransmitted NR PDCP PDUs transmitted to the lower layer in order of NR-U sequence numbers. For example, the status message 410 may include information on the highest NR PDCP PDU sequence number transmitted to a lower layer among NR PDCP PDUs received from the CU 310. Herein, among the PDUs, a retransmitted NR PDCP PDU may be excluded. For example, in the RLC AM, the status message 410 may include information on an NR PDCP PDU sequence number successfully delivered out of sequence to the UE among NR PDCP PDUs received from the CU 310. Herein, among the PDUs, a retransmitted NR PDCP PDU may be excluded.

The status message 410 may be triggered based on an event. For example, if the DU 320 detects a successful random access channel (RACH) access by the UE (e.g., the terminal 120) to the corresponding data radio bearer, the DU 320 may transmit the status message 410 to the CU 310. The CU 310 may start downlink data transmission before receiving the status message 410. For example, the status message 410 may have the following format referred to as a downlink data delivery status (DDDS) frame.

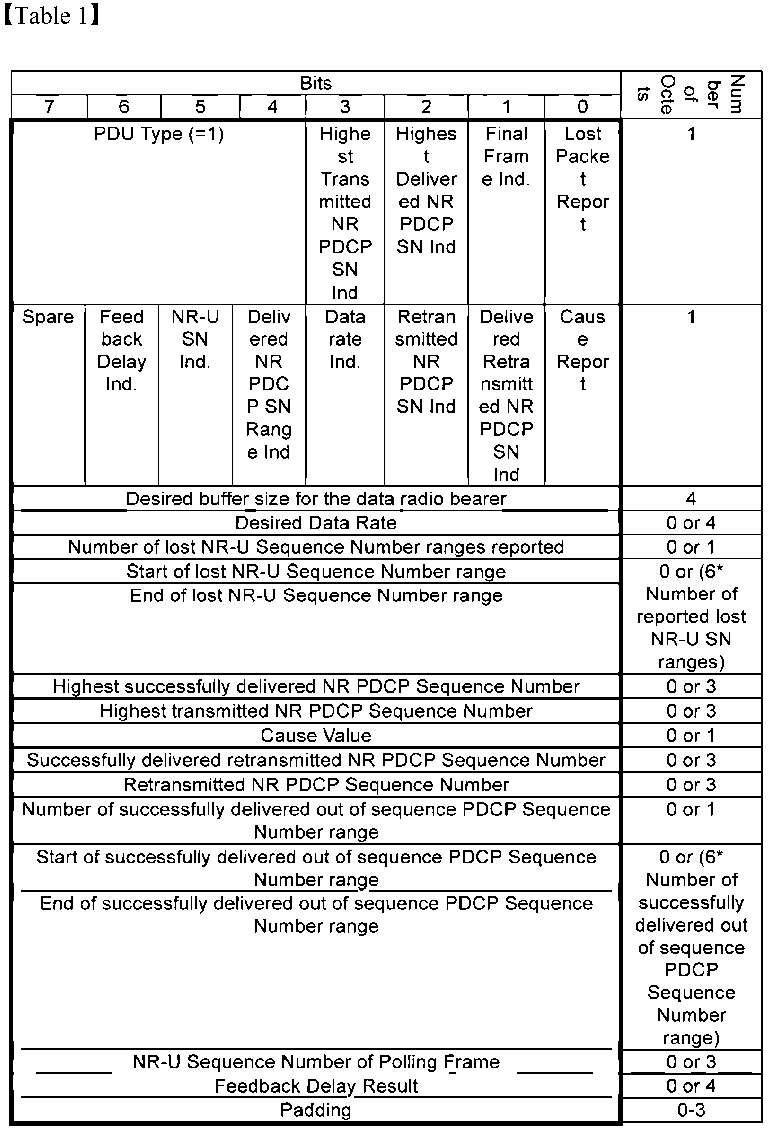

Referring to Table 1, when the status message 410 is a last downlink status report, the status message 410 may include a separate indicator (e.g., Final Frame Ind.). The CU 310, having received the indicator, may consider that no further UL or DL data transmission is expected between the DU 320 and the terminal 120. The status message 410 may include a detected indicator of a radio link outage or a radio link resume for the associated data radio bearer. For example, a specific value of a parameter (e.g., "Cause Value") may indicate a radio link outage (e.g., a value '1' of the parameter indicates a radio link outage) or a radio link resume (e.g., a value '2' of the parameter indicates a radio link resume). For example, through the value of the parameter, the radio link outage or the radio link resume may be indicated by both downlink and uplink, indicated for only downlink, or indicated for only uplink.

Referring to Table 1, 'Desired buffer size for the data radio bearer' may indicate a desired buffer size for an associated data radio bearer in units of bytes. 'Desired buffer size for the data radio bearer' has a 4-octet structure and may have a value from 0 to 2³²-1. As an example, 'Desired Data Rate' indicates an amount of data desired to be received during a specific time (e.g., 1 second) in units of bytes. 'Desired Data Rate' has a 4-octet structure and may have a value from 0 to 2³²-1.

The CU 310 may receive the status message 410 from the DU 320. The CU 310 may determine a desired buffer size (e.g., 'Desired buffer size for the data radio bearer') and a data rate (e.g., 'Desired Data Rate') as an amount of data to be transmitted from the CU 310. If a value of the desired buffer size is 0, the CU 310 may stop data transmission of the corresponding bearer. In a case that the value of the desired buffer size is greater than 0, the CU 310 may transmit data up to an amount of data indicated by the desired buffer size per bearer. For example, the data may include data to be retransmitted. In addition to the retransmitted data, the data may include new data starting from the last "highest successfully delivered NR PDCP Sequence Number" (e.g., 'Highest successfully delivered NR PDCP Sequence Number') for the RLC AM, or starting from the last "highest transmitted NR PDCP Sequence Number" (e.g., 'Highest transmitted NR PDCP Sequence Number') for an RLC UM. The value of the desired data rate indicates an amount of data desired to be received for approximately 1 second. Information on the desired buffer size and information on the desired data rate may be valid until a next status message is received.

### 2. Transmission of User Data

The DU 320 may transmit user data 420 to the CU 310. A purpose of a transmission procedure of the user data 420 is to provide NR-U specific sequence number information when transmitting the user data 420 carrying a DL NR PDCP PDU from the CU 310 to the DU 320. In downlink, an NR user plane protocol instance using the transmission procedure of the user data 420 may be connected to only a single radio bearer. The CU 310 may allocate consecutive NR-U sequence numbers to each transmitted NR-U packet. A new NR-U sequence number shall be allocated to a retransmitted NR PDCP PDU. The CU 310 may inform the DU 320 whether the NR-U packet is a retransmission of an NR PDCP PDU. The CU 310 may also indicate the DU 320 to discard all NR PDCP PDUs including up to a defined DL discard NR PDCP PDU SN or to discard one or a plurality of downlink NR PDCP PDU blocks.

For example, the user data 420 may have the following format.

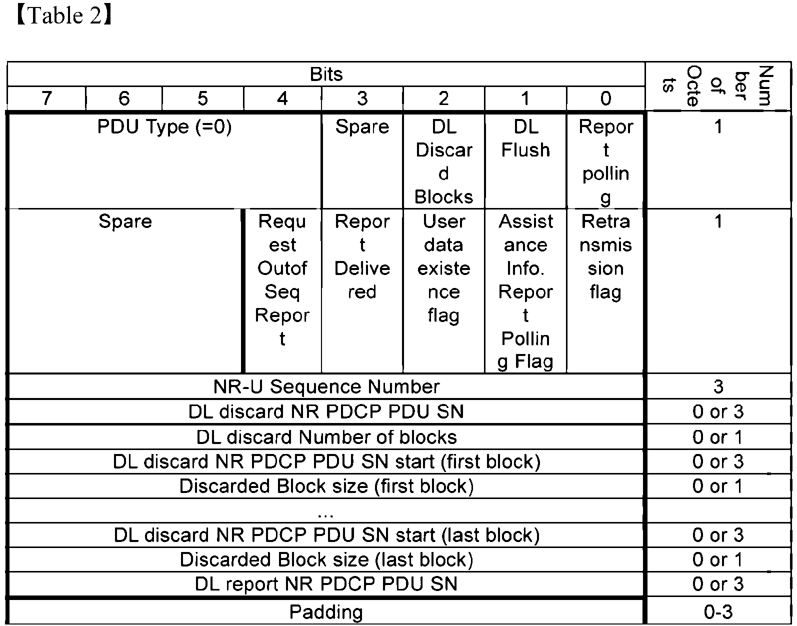

Referring to Table 2, as an example, 'NR-U Sequence Number' indicates an NR-U sequence number allocated by the CU 310. 'NR-U Sequence Number' has a 3-octet structure and may have a value from 0 to 2²⁴-1. As an example, 'DL discard NR PDCP PDU SN' may indicate a corresponding SN in a case that PDUs up to the NR PDCP PDU SN are discarded. 'DL discard NR PDCP PDU SN' has a 3-octet structure and may have a value from 0 to 2¹⁸-1. As an example, 'DL discard Number of blocks' indicates downlink blocks being discarded. 'DL discard Number of blocks' has a 1-octet structure and may have a value from 1 to 244. As an example, 'DL discard NR PDCP PDU SN start' indicates a start SN in the corresponding block to be discarded, and 'Discarded Block size' indicates the number of PDCP PDUs to be discarded from the start SN.

In FIG. 4, an NR PDCP PDU is described as an example of a downlink packet, but embodiments of the present disclosure are not limited thereto. On a W1 interface between an eNB-DU and an eNB-CU, PDCP PDUs may also be targets of application of embodiments of the present disclosure. In other words, downlink packets include PDCP PDUs in an LTE network, and the CU 310 and the DU 320 may correspond to an eNB-CU and an eNB-DU that configure an eNB, respectively. Hereinafter, the description of the F1 interface 350 (e.g., F1-U) may be equally applied to the W1 interface between the eNB-CU and the eNB-DU.

According to an embodiment, a base station (e.g., the base station 101 of FIG. 1A) may include an upper base station and a lower base station. The upper base station (e.g., the CU 310) may identify congestion of a lower base station (e.g., the DU 320). The upper base station may transmit, to a core network (e.g., a user plane function (UPF)), information on the congestion of the lower base station in order to reduce latency. Hereinafter, in the present specification, a technical feature for the upper base station to identify the congestion of the lower base station and to transmit the information on the congestion of the lower base station to the core network will be described. Hereinafter, in the present specification, for convenience of description, the upper base station will be described as the CU 310, and the lower base station will be described as the DU 320. This is for convenience of description, and it is not limited thereto.

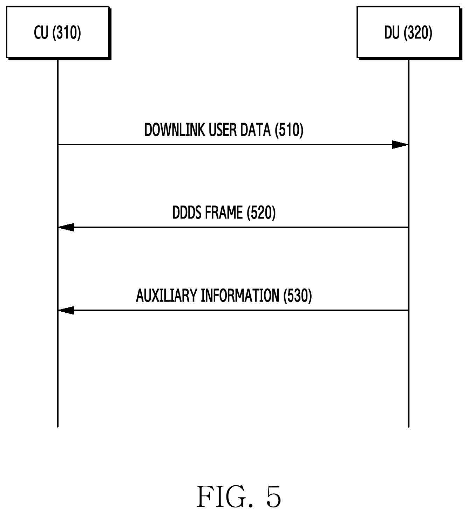

FIG. 5 illustrates an example in which information on a DU is transmitted to a CU.

Referring to FIG. 5, a base station (e.g., the base station 101 of FIG. 1A) of a wireless communication system related to a long term evolution (LTE) standard and/or a new radio (NR) standard may support dual connectivity including evolved universal terrestrial radio access (E-UTRA)-NR dual connectivity (EN-DC) and/or NR-DC, or may be configured as a split base station.

For example, a network element (NE) configuring the base station may include a central unit (CU) 310, a distributed unit (DU) 320, and/or a radio unit (RU) (not illustrated). For example, the CU 310 may be responsible for a function of an upper layer than the DU 320 by being connected with one or more DUs (e.g., the DU 320). For example, the CU 310 may be responsible for a function of a radio resource control (RRC) layer and a packet data convergence protocol (PDCP) layer. The DU 320 and the RU (not illustrated) may be responsible for a function of a lower layer.

For example, the CU 310 may manage a buffer of the DU 320 through flow control. The DU 320 may perform a portion of functions (high PHY) of a radio link control (RLC) layer, a media access control (MAC) layer, and a physical (PHY) layer, and the RU (not illustrated) may be responsible for remaining functions (low PHY) of the PHY layer.

In operation 510, the CU 310 may transmit downlink user data to the DU 320. For example, the downlink user data may include an NR PDCP PDU. For example, the downlink user data may include data for requesting a downlink data delivery status (DDDS) frame (hereinafter, a DDDS frame). The downlink user data may include data for requesting auxiliary information.

In operation 520, the DU 320 may transmit the DDDS frame to the CU 310. The DDDS frame may include information on a state of the downlink data received from the CU 310. For example, the DDDS frame may be an example of the status message 410 of FIG. 4.

For example, the DDDS frame may include desired buffer size (DBS) information and/or information on a lost NR-U sequence number. The DU 320 may request data to be received from the CU 310 by transmitting the desired buffer size information to the CU 310. The CU 310 may transmit a buffered packet to the DU 320 based on the desired buffer size information. In this case, in a case that a size of data buffered in the CU 310 is greater than a size of the data requested according to the desired buffer size information of the DU 320, the number of packets buffered in the CU 310 may increase. As the number of packets buffered in the CU 310 increases, a packet delay (or a buffering delay) may increase.

In operation 530, the DU 320 may transmit the auxiliary information to the CU 310. For example, the auxiliary information may include link information. The link information may include at least one of channel quality information (CQI), hybrid automatic repeat request (HARQ) information, and/or power headroom report (PHR) information. For example, the auxiliary information may have a format below.

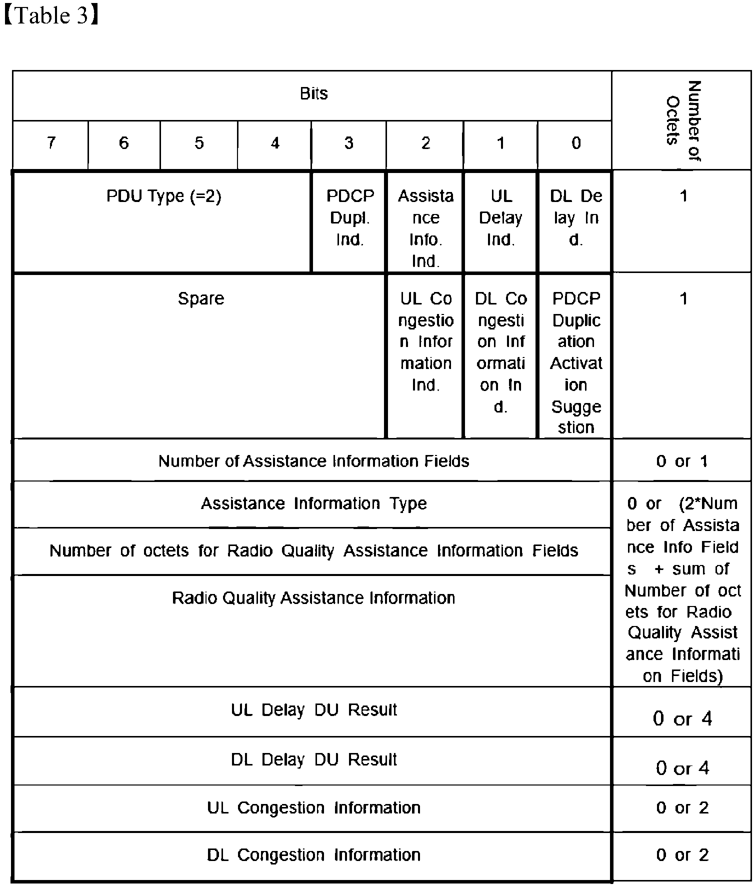

According to an operation according to the L4S, network congestion may be detected, and explicit congestion notification (ECN) for notifying the same may be used. For example, according to a proportional ECN marking (PEM) scheme, an ECN marking may be performed as a congestion experience (CE) bit in an internet protocol header set to a designated value (e.g., '3') in proportion to congestion. Network equipment disposed in an E2E path may identify congestion, and may perform the ECN marking according to the congestion (or a delay). The client may transmit information on a ratio of packets on which the ECN marking is performed among entire packets to the server. The server may decrease a transmission rate based on the information on the ratio of the packets on which the ECN marking is performed among entire packets to alleviate the congestion and to reduce delay time on the E2E path.

For example, the ECN marking may be performed based on setting (or changing) a value of an ECN field included in the IP header. For example, the ECN field may be set to 2 bits. In a case that the value of the ECN field is a first value (e.g., '00'), it may indicate that the IP packet does not use an ECN function. In a case that the value of the ECN field is the first value (e.g., '01') or a second value (e.g., '10'), it may indicate that a TCP protocol also supports the ECN function. In a case that the value of the ECN field is a third value (e.g., '11'), it may indicate that the congestion has occurred. Hereinafter, performing the ECN marking may mean setting (or changing) the value of the ECN field to the third value (or a designated value).

Among delays in a mobile communication network, a delay of the E2E path between the server (e.g., the application server) and the client generally occupies a high proportion. Therefore, in a case that the L4S is introduced into the base station, a latency performance may be improved.

For example, in a split base station structure described above, a cause of the delay occurring in the mobile communication network may mostly occur in a lower base station (e.g., the DU 320 or the RU (not illustrated)). For example, the cause of the delay may include at least one of degradation of a quality of a wireless network, an increase in the number of users, a scheduling delay according to an increase in data, and/or a shortage of a wireless resource.

To apply the ECN marking of the L4S, the IP header of the packet transmitted from the application should be modified. Therefore, before an operation (or processing) on cyphering and/or integrity for the packet is performed, the ECN marking should be performed in an upper base station (e.g., the CU 310). Therefore, to apply the probabilistic ECN marking (or the PEM scheme), the upper base station (e.g., the CU 310) needs to obtain information affecting latency from the lower base station (e.g., the DU 320). For example, the information affecting latency may include a channel quality index (CQI), a modulation and coding scheme (MCS), and/or a scheduling delay value. The upper base station (e.g., the CU 310) may have to obtain the information affecting latency from the lower base station (e.g., the DU 320) through the DDDS frame and/or the auxiliary information. In a case that the information affecting latency is transmitted through the DDDS frame and/or the auxiliary information, additional resource waste may be caused, and an increase in complexity of an algorithm for the ECN marking may be caused. In addition, due to time consumption for obtaining the information affecting latency, it may be difficult to secure low latency.

Therefore, in the following description, a technical feature for identifying congestion based on at least one of the DBS information received from the DU 320 in the CU 310, the number of packets buffered in the CU 310, and/or the buffering delay will be described. In addition, to alleviate the congestion and to reduce E2E latency, a technical feature for determining a standard for probabilistically performing the ECN marking (or the L4S) on a packet and for performing the ECN marking according to the determined standard will be described below. In addition, in a case that the L4S is performed in an upper core network (e.g., a user plane function (UPF)), a technical feature for performing the ECN marking (or the L4S) on a packet in the core network will be described below.

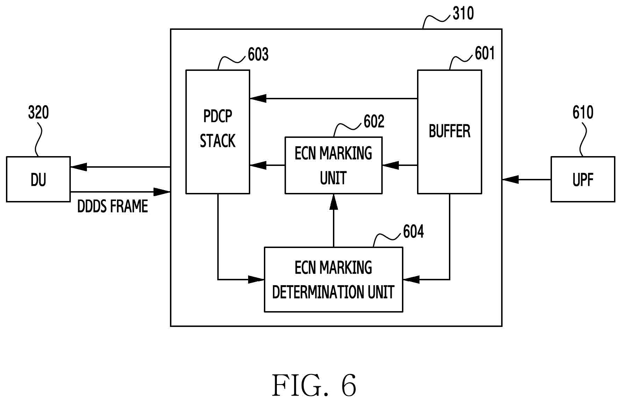

FIG. 6 illustrates an example of an operation of a CU for performing an ECN marking.

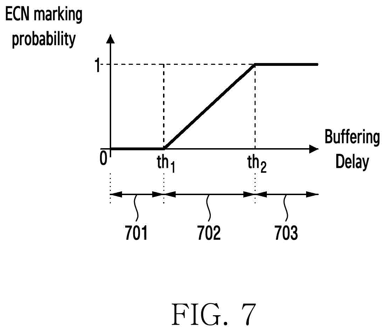

FIG. 7 illustrates an ECN marking probability according to a buffering delay.

Terms such as '...unit', '...device', '...object', and '...structure', and the like, used below may mean at least one shape structure or may mean a unit for processing a function.

A CU 310 may identify (or track) DBS information and a change amount of DBS received from a DU 320. The CU 310 may perform the ECN marking on a packet based on the number of packets buffered in the CU 310 (or in a buffer in the CU 310) and a buffering delay. The CU 310 may secure an E2E latency performance by using the number of buffered packets and the buffering delay for an ECN marking probability. Since the number of buffered packets and the buffering delay are directly used for calculation of the ECN marking probability, complexity of implementation may be reduced.

According to an embodiment, in a case that the ECN marking is performed in a core network (e.g., a user plane function (UPF) 610), the CU 310 may transmit, to the core network, information obtained in the CU 310 or information on an ECN marking probability identified based on the obtained information.

According to an embodiment, in a split base station structure, the DU 320 may request a size of data capable of accommodating by using DBS information included in a DDDS frame to the CU 310. For example, in a case that congestion occurs in the DU 320, a size of DBS may decrease. The DU 320 may transmit the DBS information to the CU 310, and the CU 310 may identify (or track) a change of a DBS value. The CU 310 may perform the ECN marking based on the number of packets buffered in the CU 310 due to the congestion of the DU 320, an increase rate of the number of buffered packets, and/or the buffering delay. Accordingly, low latency in an E2E may be achieved. Hereinafter, a detailed operation of the CU 310 for the above-described operation will be described.

Referring to FIG. 6, the CU 310 may include a buffer 601, an ECN marking unit 602, a PDCP stack 603, and/or an ECN marking determination unit 604. For example, the CU 310 may receive data through the core network (e.g., the UPF 610). The CU 310 may (temporarily) store the received data in the buffer 601. The CU 310 may deliver the stored data to the PDCP stack 603 to transmit the data stored in the buffer 601 to the DU 320. The CU 310 may transmit the data to the DU 320 through the PDCP stack 603. For example, the CU 310 may perform the ECN marking on a packet for the data stored in the buffer 601 by using the ECN marking unit 602. The CU 310 may deliver the packet on which the ECN marking is performed to the PDCP stack 603 by using the ECN marking unit 602, and may transmit the packet to the DU 320.

According to an embodiment, the CU 310 may perform a probabilistic ECN marking based on the buffering delay of the CU 310. For example, the CU 310 may identify the buffering delay identified (or generated) in the PDCP stack 603. As an example, the buffering delay may mean a time from a timing when data is stored in the buffer 601 to a timing when the data is delivered to the PDCP stack 603. This is merely an example, and timings for measuring (or identifying) the buffering delay may be changed.

The ECN marking determination unit 604 may determine (or identify, calculate) an ECN marking probability by using the buffering delay obtained from the PDCP stack 603. For example, the ECN marking determination unit 604 may determine the ECN marking probability based on a graph of FIG. 7.

Referring to FIG. 7, in a case that the buffering delay is within a first interval 701, the CU 310 may identify that the congestion is not occurred. In a case that the buffering delay is within the first interval 701, the CU 310 may determine the ECN marking probability to '0'. For example, the first interval 701 may be set such that the buffering delay is between 0 and a first threshold value (th1). In a case that the buffering delay is equal to or less than the first threshold value, the CU 310 may identify (or determine) that the congestion is not occurred.

In a case that the buffering delay is within a second interval 702, the CU 310 may change the ECN marking probability according to the buffering delay. For example, the CU 310 may set such that the buffering delay and the ECN marking probability are mapped in a one-to-one manner. The second interval 702 may be set between the first threshold value (th1) and a second threshold value (th2). The second interval 702 may be set as an interval that exceeds the first threshold value (th1) and is equal to or less than the second threshold value (th2). In the second interval 702, the buffering delay and the ECN marking probability may be set to have a linear relationship.

In a case that the buffering delay is within a third interval 703, the CU 310 may identify that the congestion is severe. In a case that the buffering delay is within the third interval 703, the CU 310 may determine the ECN marking probability to '1'. For example, the third interval 703 may be set as an interval that exceeds the second threshold value (th2).

The ECN marking probability according to the buffering delay illustrated in FIG. 7 is merely an example, and the ECN marking probability according to the buffering delay may be set in various ways.

Referring back to FIG. 6, the CU 310 may receive the DDDS frame from the DU 320. The DDDS frame may include the DBS information (or the DBS value). The CU 310 may perform the probabilistic ECN marking based on the DBS information.

For example, the CU 310 may set the DBS value in a state in which the congestion is not occurred as a reference value. The CU 310 may determine the ECN marking probability according to a ratio in which the DBS value is decreased. As an example, in an initial state in which the congestion is not occurred, the DBS value may be x [Mbits] (e.g., 10 [Mbits]). The CU 310 may set the reference value as x [Mbits]. As the congestion occurs, the DU 320 may request a DBS value of y [Mbits] (e.g., 8 [Mbits]) to the CU 310. The CU 310 may perform the ECN marking with a probability (e.g., 1-0.8z) of $1 - \frac{y}{x} z$ (z is a constant).

According to an embodiment, the CU 310 may perform the probabilistic ECN marking based on the number of packets buffered in the CU 310 (or the buffer 601). In a case that the number of buffered packets exceeds the reference value, based on the maximum value of the number of buffered packets in a state in which the congestion is not occurred, the CU 310 may determine the ECN marking probability according to an exceeding ratio. For example, in a state in which the congestion is not occurred, the number of buffered packets is maintained between 0 and 100, but in a case that 120 packets are temporarily stored in the buffer 601, the ECN marking probability may be determined according to the following equation. [Equation 1] $p = min \left(1, \left(1-\frac{100}{120}x\right)\right)$

Referring to the Equation 1, p is the ECN marking probability. min (a, b) is a function that outputs a smaller value among a and b. x is a constant.

According to an embodiment, the CU 310 may obtain information on the ECN marking probability determined in the DU 320 from the DU 320. The CU 310 may determine the ECN marking probability based on the information on the ECN marking probability determined in the DU 320. For example, the information on the ECN marking probability determined in the DU 320 may be transmitted through auxiliary information (e.g., the auxiliary information 530 of FIG. 5). As an example, the information on the ECN marking probability may include uplink (UL) congestion information and/or downlink (DL) congestion information. The uplink congestion information may indicate an ECN marking probability for an uplink packet. The downlink congestion information may indicate an ECN marking probability for a downlink packet.

As described above, the CU 310 may perform the probabilistic ECN marking by using at least one of the DBS information, the number of buffered packets, and/or the buffering delay. In the above-described embodiment, the ECN marking probability according to each of the DBS information, the number of buffered packets, and the buffering delay have been described, but this is for convenience of description, and the ECN marking probability may be determined according to at least a portion of the DBS information, the number of buffered packets, and/or the buffering delay.

In the above-described embodiment, an example in which the CU 310 determines the ECN marking probability based on at least one of the DBS information, the number of buffered packets, and/or the buffering delay has been described, but the CU 310 may transmit the DBS information, the number of buffered packets, and/or the buffering delay to the core network, and the ECN marking probability may be determined in the core network (e.g., the UPF 610). According to an embodiment, the CU 310 may also transmit the ECN marking probability to the core network.

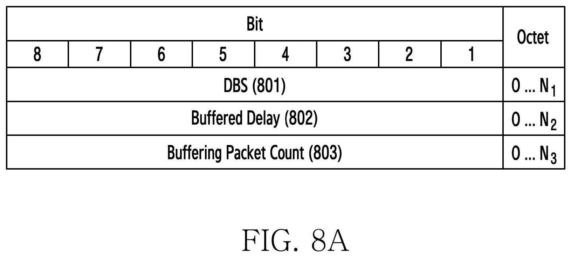

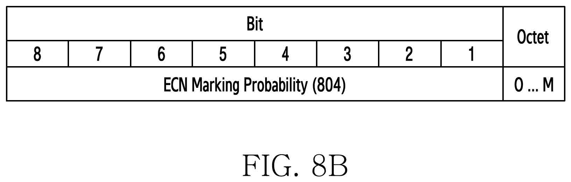

Hereinafter, in FIG. 8A and FIG. 8B, an example in which the ECN marking probability and/or information for determining the ECN marking probability is transmitted to the core network will be described.

FIG. 8A and FIG. 8B illustrate an example of information transmitted to a core network.

Referring to FIG. 8A, a CU 310 may transmit, to a core network (e.g., a UPF 601), DBS information 801, information 802 on a buffering delay, and/or information 803 on the number of buffered packets, received from a DU 320.

For example, the DBS information 801 may be configured with N₁ octets. The DBS information 801 may be indicated in a unit of byte through the N₁ octets (octet). The information 802 on the buffering delay may be configured with N₂ octets. The information 802 on the buffering delay may be indicated in a unit of millisecond [ms] through the N₂ octets. The information 803 on the number of buffered packets may be configured with N₃ octets. The information 803 on the number of buffered packets may be indicated in a unit of integer through the N₃ octets.

Referring to FIG. 8B, the CU 310 may transmit, to the core network, information 804 on an ECN marking probability obtained based on the DBS information 801, the information 802 on the buffering delay, and/or the information 803 on the number of buffered packets.

For example, the information 804 on the ECN marking probability may be represented by dividing a section between 0 and 1 into sections representable with M octets. The section between 0 and 1 may be divided into a plurality of probability sections that are discrete with a size of $\frac{1}{{2}^{θ M}}$. For example, the CU 310 may determine a probability section closest to a determined ECN marking probability among the plurality of probability sections, and may configure the information 804 on the CN marking probability corresponding to the determined probability section.

According to an embodiment, information illustrated in FIG. 8A (e.g., the DBS information 801, the information 802 on the buffering delay, and/or the information 803 on the number of buffered packets, received from the DU 320) and information illustrated in FIG. 8B (e.g., the information 804 on the ECN marking probability) may be transmitted together to the core network. According to an embodiment, at least a portion of the information illustrated in FIG. 8A and the information illustrated in FIG. 8B may be transmitted to the core network.

For example, in a case that L4S is applied in the core network, the core network may identify an ECN marking probability value to correspond to congestion occurring in a RAN (e.g., the DU 320 and an RU 220). As an example, the core network may determine the ECN marking probability based on at least a portion of the information illustrated in FIG. 8A. As an example, the core network may identify the ECN marking probability based on the information illustrated in FIG. 8B.

According to an embodiment, the at least a portion of the information illustrated in FIG. 8A and the information illustrated in FIG. 8B may be included in a general packet radio system tunneling protocol-user plane (GTP-U) packet header transmitted to the core network. According to an embodiment, in a case that uplink traffic does not exist, the at least a portion of the information illustrated in FIG. 8A and the information illustrated in FIG. 8B may be included in a dummy GTP-U packet. The dummy GTP-U packet may be transmitted to the core network.

For example, the GTP-U header may have a format below.

**[Table 4]**

| | Bits | | | | | | | |
|---|---|---|---|---|---|---|---|---|
| Octets | 8 | 7 | 6 | 5 | 4 | 3 | 2 | 1 |
| 1 | Version | | | PT | (*) | E | S | P N |
| 2 | Message Type | | | | | | | |
| 3 | Length (1st Octet) | | | | | | | |
| 4 | Length (2nd Octet) | | | | | | | |
| 5 | Tunnel Endpoint Identifier (1st Octet) | | | | | | | |
| 6 | Tunnel Endpoint Identifier (2nd Octet) | | | | | | | |
| 7 | Tunnel Endpoint Identifier (3rd Octet) | | | | | | | |
| 8 | Tunnel Endpoint Identifier (4th Octet) | | | | | | | |
| 9 | Sequence Number (1st Octet) 1) 4 | | | | | | | |
| 10 | Sequence Number (2nd Octet)1) 4) | | | | | | | |
| 11 | N-PDU Number2) 4) | | | | | | | |
| 12 | Next Extension Header Type3) 4) | | | | | | | |

| | | | | | | | | |
|---|---|---|---|---|---|---|---|---|
| 2) This field shall only be evaluated when indicated by the PN flag set to 1. 3) This field shall only be evaluated when indicated by the E flag set to 1. 4) This field shall be present if and only if any one or more of the S, PN and E | | | | | | | | |

As a non-limiting example, a network-protocol data unit (N-PDU) number field and/or a Next Extension Header Type field may be omitted in the GTP-U header.

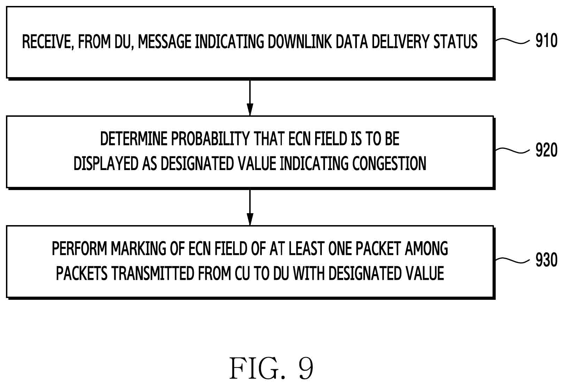

FIG. 9 is a flowchart of an operation of an electronic device for performing a marking for an ECN field.

Referring to FIG. 9, in operation 910, an electronic device (e.g., a CU 310) may receive, from a DU (e.g., the DU 320), a message indicating a downlink data delivery status. For example, the message indicating the downlink data delivery status may include at least one of the DDDS frame 520 of FIG. 5 and/or the auxiliary information 530 of FIG. 5. As an example, the message indicating the downlink data delivery status may include at least a portion or all of the information of Table 1. The message indicating the downlink data delivery status may include information on a desired buffer size. As an example, the message indicating the downlink data delivery status may include at least a portion or all of the information of Table 3. For example, the message indicating the downlink data delivery status may include uplink (UL) congestion information identified in the DU and/or downlink (DL) congestion information identified in the DU. As an example, the uplink congestion information identified in the DU may indicate a probability that an ECN field for an uplink packet is to be displayed with a designated value indicating congestion. As an example, the downlink congestion information identified in the DU may indicate a probability that an ECN field for a downlink packet is to be displayed as the designated value indicating congestion. A probability according to the uplink congestion information identified in the DU and/or the downlink congestion information identified in the DU may be identified in the DU. The probability may be distinguished from the probability that the ECN field for the downlink packet is to be displayed as the designated value indicating congestion, identified in the CU.

In operation 920, the electronic device may determine the probability that the ECN field is to be displayed as the designated value indicating congestion based on the message indicating the downlink data delivery status.

According to an embodiment, the electronic device may obtain the information on the desired buffer size based on the message indicating the downlink data delivery status. For example, the electronic device may obtain the information on the desired buffer size based on the received message. For example, the electronic device may obtain the information on the desired buffer size by identifying the information on the desired buffer size included in the received message. For example, the information on the desired buffer size may be related to a processing capability of downlink data of the DU. The information on the desired buffer size may be related to a size of downlink data that the DU requests from the CU. As the desired buffer size is larger, it may mean that a network congestion level related to the DU is lower. As the desired buffer size is smaller, it may mean that the network congestion level related to the DU is higher.

For example, the electronic device may identify a ratio of the desired buffer size according to the information on the desired buffer size to a reference desired buffer size in a normal state based on the information on the desired buffer size. The electronic device may determine the probability that the ECN field is to be displayed as the designated value indicating congestion based on the ratio.

For example, the electronic device may track a change of the desired buffer size. The electronic device may predict (or identify) network congestion related to the DU based on the change of the desired buffer size. The electronic device may determine the probability that the ECN field is to be displayed as the designated value indicating congestion such that a decrease amount of the desired buffer size is proportional.

According to an embodiment, the electronic device may determine the probability that the ECN field is to be displayed as the designated value indicating congestion based on delay information on a buffer of the electronic device. For example, the electronic device may identify the delay information on the buffer included in memory of the electronic device. The electronic device may determine the probability that the ECN field is to be displayed as the designated value indicating congestion based on the identified delay information.

For example, the electronic device may identify delay time according to the delay information. The delay time may be related to a length of a time interval between a first timing when a packet received from another device for a user plane function is stored in the buffer of the electronic device and a second timing when the packet is transmitted to the DU.

The electronic device may determine the probability that the ECN field is to be displayed as the designated value indicating congestion to 0 based on the delay time within a first range (e.g., the first interval 701 of FIG. 7). The electronic device may determine the probability that the ECN field is to be displayed as the designated value indicating congestion to 0 based on identifying that the delay time is within the first range.

The electronic device may determine the probability that the ECN field is to be displayed as the designated value indicating congestion to a probability corresponding to the delay time based on the delay time within a second range (e.g., the second interval 702 of FIG. 7). The electronic device may determine the probability that the ECN field is to be displayed as the designated value indicating congestion to the probability corresponding to the delay time based on identifying that the delay time is within the second range.

The electronic device may determine the probability that the ECN field is to be displayed as the designated value indicating congestion to 1 based on the delay time within a third range (e.g., the third interval 703 of FIG. 7). The electronic device may determine the probability that the ECN field is to be displayed as the designated value indicating congestion to 1 based on identifying that the delay time is within the third range.

For example, the electronic device may predict (or identify) the network congestion related to the DU according to a size of the delay time. The electronic device may determine the probability that the ECN field is to be displayed as the designated value indicating congestion such that the delay time is proportional.

According to an embodiment, the electronic device may determine the probability that the ECN field is to be displayed as the designated value indicating congestion based on the number of packets stored in the buffer of the electronic device. For example, the electronic device may identify the number of packets stored in the buffer included in the memory of the electronic device. The electronic device may determine the probability that the ECN field is to be displayed as the designated value indicating congestion based on the number of packets stored in the buffer.

For example, the electronic device may monitor the number of buffered packets in the electronic device. The electronic device may predict (or identify) the network congestion related to the DU according to the number of buffered packets in the electronic device. The electronic device may determine the probability that the ECN field is to be displayed as the designated value indicating congestion such that an increase amount of the number of buffered packets is proportional.

According to an embodiment, the electronic device may determine the probability that the ECN field is to be displayed as the designated value indicating congestion based on at least one of the information on the desired buffer size, the delay information on the buffer, and/or the number of packets stored in the buffer.

In operation 930, the electronic device may perform a marking of the ECN field of at least one packet among packets transmitted from the CU to the DU with the designated value. For example, the electronic device may perform the marking of the ECN field of the at least one packet among the packets transmitted from the CU to the DU with the designated value according to the probability that the ECN field is to be displayed as the designated value indicating congestion. As an example, the electronic device may set a ratio of the at least one packet for the packets as the probability.

According to an embodiment, an operation of performing the marking of the ECN field as the designated value may be performed in the another device for the user plane function (e.g., the UPF 610 of FIG. 6). For example, the electronic device may transmit, to the another device for the user plane function, information on the probability that the ECN field is to be displayed as the designated value indicating congestion. For example, the electronic device may transmit at least one of the information on the desired buffer size, the delay information on the buffer, and/or the number of packets stored in the buffer to the another device for the user plane function (e.g., the UPF 610 of FIG. 6). The another device may determine the probability that the ECN field is to be displayed as the designated value indicating congestion based on the at least one of the information on the desired buffer size, the delay information on the buffer, and/or the number of packets stored in the buffer, received from the electronic device.

According to an embodiment, a communication device configured to perform functions of a central unit (CU) may comprise a transceiver, at least one processor comprising processing circuitry, and memory, comprising one or more storage mediums, storing instructions. The instructions, when executed by the at least one processor individually or collectively, may cause the communication device to receive, through the transceiver, a message indicating a downlink data delivery status from a distributed unit (DU) connected with the CU. The instructions, when executed by the at least one processor individually or collectively, may cause the communication device to determine, based on the message, a probability that an explicit congestion notification (ECN) field is to be displayed as a designated value indicating congestion. The instructions, when executed by the at least one processor individually or collectively, may cause the communication device to perform a marking for an ECN filed of at least one packet among packets transmitted from the CU to the DU with the designated value, according to the probability.

According to an embodiment, the instructions, when executed by the at least one processor individually or collectively, may cause the communication device to obtain, based on the message, information on a desired buffer size. The instructions, when executed by the at least one processor individually or collectively, may cause the communication device to determine, based on the information on the desired buffer size, the probability that the explicit congestion notification (ECN) field is to be displayed as the designated value indicating congestion.

According to an embodiment, the instructions, when executed by the at least one processor individually or collectively, may cause the communication device to, based on the information on the desired buffer size of the DU, identify a ratio of the desired buffer size to a reference desired buffer size. The instructions, when executed by the at least one processor individually or collectively, may cause the communication device to determine, based on the ratio, the probability.

According to an embodiment, the instructions, when executed by the at least one processor individually or collectively, may cause the communication device to identify the number of packets stored in a buffer comprised in the memory. The instructions, when executed by the at least one processor individually or collectively, may cause the communication device to determine, based on a ratio of the number of packets stored in the buffer to a reference value, the probability.

According to an embodiment, the instructions, when executed by the at least one processor individually or collectively, may cause the communication device to identify delay information on a buffer comprised in the memory. The instructions, when executed by the at least one processor individually or collectively, may cause the communication device to determine, based on the delay information, the probability.

According to an embodiment, the instructions, when executed by the at least one processor individually or collectively, may cause the communication device to identify delay time according to the delay information. The delay time may be related to a length of a time interval between a first timing when a packet received from another device for a user plane function is stored in the buffer and a second timing when the packet is transmitted to the DU.

According to an embodiment, the instructions, when executed by the at least one processor individually or collectively, may cause the communication device to, based on the delay time within a first range, determine the probability to '0'. The instructions, when executed by the at least one processor individually or collectively, may cause the communication device to, based on the delay time within a second range, determine the probability to a probability corresponding to the delay time. The instructions, when executed by the at least one processor individually or collectively, may cause the communication device to, based on the delay time within a third range, determine the probability to '1'.

According to an embodiment, the instructions, when executed by the at least one processor individually or collectively, may cause the communication device to obtain, based on the message, information on a desired buffer size. The instructions, when executed by the at least one processor individually or collectively, may cause the communication device to transmit the information on the desired buffer size to another device for a user plane function. The probability that the ECN field is to be displayed as the designated value may be determined by the another device based on the information on the desired buffer size.

According to an embodiment, the instructions, when executed by the at least one processor individually or collectively, may cause the communication device to transmit information on the probability that the ECN field is to be displayed as the designated value to another device for a user plane function.

According to an embodiment, the message may comprise information on a different probability that the ECN field is to be displayed as the designated value indicating congestion.

According to an embodiment, the CU may be related to a packet data convergence protocol (PDCP) layer. The DU may be related to a radio link control layer (RLC) and a medium access control (MAC) layer.

According to an embodiment, a method performed by a communication device configured to perform functions of a central unit (CU) may comprise receiving, through a transceiver, a message indicating a downlink data delivery status from a distributed unit (DU) connected with the CU. The method may comprise determining, based on the message, a probability that an explicit congestion notification (ECN) field is to be displayed as a designated value indicating congestion. The method may comprise performing a marking for an ECN filed of at least one packet among packets transmitted from the CU to the DU with the designated value, according to the probability.

According to an embodiment, the method may comprise obtaining, based on the message, information on a desired buffer size. The method may comprise determining, based on the information on the desired buffer size, the probability that the explicit notification congestion (ECN) field is to be displayed as the designated value indicating congestion.

According to an embodiment, the method may comprise, based on the information on the desired buffer size of the DU, identifying a ratio of the desired buffer size to a reference desired buffer size. The method may comprise determining, based on the ratio, the probability.

According to an embodiment, the method may comprise identifying the number of packets stored in a buffer comprised in the memory. The method may comprise determining, based on a ratio of the number of packets stored in the buffer to a reference value, the probability.

According to an embodiment, the method may comprise identifying delay information on a buffer comprised in the memory. The method may comprise determining, based on the delay information, the probability.

According to an embodiment, the method may comprise identifying delay time according to the delay information. The delay time may be related to a length of a time interval between a first timing when a packet received from another device for a user plane function is stored in the buffer and a second timing when the packet is transmitted to the DU.

According to an embodiment, the method may comprise, based on the delay time within a first range, determining the probability to '0'. The method may comprise, based on the delay time within a second range, determining the probability to a probability corresponding to the delay time. The method may comprise, based on the delay time within the third range, determining the probability to '1'.

According to an embodiment, the method may comprise obtaining, based on the message, information on a desired buffer size. The method may comprise transmitting the information on the desired buffer size to another device for a user plane function. The probability that the ECN field is to be displayed as the designated value may be determined in the another device based on the information on the desired buffer size.

According to an embodiment, the method may comprise transmitting information on the probability that the ECN field is to be displayed as the designated value to the another device for the user plane function.

According to an embodiment, the CU may be related to a packet data convergence protocol (PDCP) layer. The DU may be related to a radio link layer (RLC) and a medium access control (MAC) layer.

According to an embodiment, a non-transitory computer readable storage medium may store one or more programs. The one or more programs may comprise instructions, which, when executed by at least one processor of an electronic device configured to perform functions of a central unit (CU), cause the electronic device to receive, through a transceiver, a message indicating a downlink data delivery status from a distributed unit (DU) connected with the CU. The one or more programs may comprise instructions, which, when executed by the at least one processor of the electronic device, cause the electronic device to determine, based on the message, a probability that an explicit congestion notification (ECN) field is to be displayed as a designated value indicating congestion. The one or more programs may comprise instructions, which, when executed by the at least one processor of the electronic device, cause the electronic device to perform a marking for an ECN filed of at least one packet among packets transmitted from the CU to the DU with the designated value, according to the probability.

According to the above-described embodiment, in a split base station structure, a lower base station (e.g., the DU 320) may transmit a DDDS frame to an upper base station (e.g., the CU 310). The lower base station may request a size of data capable of accommodating in the lower base station by using a DBS included in the DDDS frame. The upper base station may identify whether congestion of the lower base station occurs. In a case that the congestion of the lower base station occurs, a size of the DBS may decrease. In a case that the congestion of the lower base station occurs, the number of packets buffered in the upper base station may increase. In a case that the congestion of the lower base station occurs, a buffering delay of the upper base station may increase. Therefore, the upper base station may determine an ECN marking probability based on at least one of the size of the DBS, the number of buffered packets, and/or the buffering delay. According to the above-described embodiment, low latency in an E2E may be provided.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium (e.g., the memory 820) that is readable by a machine (e.g., the DU320, an electronic device operating as the DU 320). For example, a processor (e.g., the processor 120) of the machine (e.g., the DU320, an electronic device operating as the DU 320) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A communication device configured to perform functions of a central unit (CU) comprising:
a transceiver;
at least one processor comprising processing circuitry; and
memory, comprising one or more storage mediums, storing instructions,
wherein the instructions, when executed by the at least one processor individually or collectively, cause the communication device to:
receive, through the transceiver, a message indicating a downlink data delivery status from a distributed unit (DU) connected with the CU,
determine, based on the message, a probability that an explicit congestion notification (ECN) field is to be displayed as a designated value indicating congestion, and
perform a marking for an ECN filed of at least one packet among packets transmitted from the CU to the DU with the designated value, according to the probability.

2. The communication device of claim 1, wherein the instructions, when executed by the at least one processor individually or collectively, further cause the communication device to:
obtain, based on the message, information on a desired buffer size, and
determine, based on the information on the desired buffer size, the probability that the explicit congestion notification (ECN) field is to be displayed as the designated value indicating congestion.

3. The communication device of claim 2, wherein the instructions, when executed by the at least one processor individually or collectively, further cause the communication device to:
based on the information on the desired buffer size of the DU, identify a ratio of the desired buffer size to a reference desired buffer size, and
determine, based on the ratio, the probability.

4. The communication device of claim 1, wherein the instructions, when executed by the at least one processor individually or collectively, further cause the communication device to:
identify the number of packets stored in a buffer comprised in the memory, and
determine, based on a ratio of the number of packets stored in the buffer to a reference value, the probability.

5. The communication device of claim 1, wherein the instructions, when executed by the at least one processor individually or collectively, further cause the communication device to:
identify delay information on a buffer comprised in the memory, and
determine, based on the delay information, the probability.

6. The communication device of claim 5, wherein the instructions, when executed by the at least one processor individually or collectively, further cause the communication device to identify delay time according to the delay information,
wherein the delay time is related to a length of a time interval between a first timing when a packet received from another device for a user plane function is stored in the buffer and a second timing when the packet is transmitted to the DU.

7. The communication device of claim 6, wherein the instructions, when executed by the at least one processor individually or collectively, further cause the communication device to:
based on the delay time within a first range, determine the probability to '0',
based on the delay time within a second range, determine the probability to a probability corresponding to the delay time, and
based on the delay time within a third range, determine the probability to '1'.

8. The communication device of claim 2, wherein the instructions, when executed by the at least one processor individually or collectively, further cause the communication device to:
obtain, based on the message, information on a desired buffer size,
transmit the information on the desired buffer size to another device for a user plane function, and,
wherein the probability that the ECN field is to be displayed as the designated value is determined by the another device based on the information on the desired buffer size.

9. The communication device of claim 1, wherein the instructions, when executed by the at least one processor individually or collectively, further cause the communication device to transmit information on the probability that the ECN field is to be displayed as the designated value to another device for a user plane function.

10. The communication device of claim 1, wherein the message further comprises information on a different probability that the ECN field is to be displayed as the designated value indicating congestion.

11. The communication device of claim 1, wherein the CU is related to a packet data convergence protocol (PDCP) layer, and
wherein the DU is related to a radio link control layer (RLC) and a medium access control (MAC) layer.

12. A method performed by a communication device configured to perform functions of a central unit (CU), comprising:
receiving, through a transceiver, a message indicating a downlink data delivery status from a distributed unit (DU) connected with the CU,
determining, based on the message, a probability that an explicit congestion notification (ECN) field is to be displayed as a designated value indicating congestion, and
performing a marking for an ECN filed of at least one packet among packets transmitted from the CU to the DU with the designated value, according to the probability.

13. The method of claim 12, wherein the method further comprises:
obtaining, based on the message, information on a desired buffer size, and
determining, based on the information on the desired buffer size, the probability that the explicit notification congestion (ECN) field is to be displayed as the designated value indicating congestion.

14. The method of claim 13, wherein the method further comprises:
based on the information on the desired buffer size of the DU, identifying a ratio of the desired buffer size to a reference desired buffer size, and
determining, based on the ratio, the probability.

15. A non-transitory computer readable storage medium storing one or more programs, the one or more programs comprising instructions, which, when executed by at least one processor of an electronic device configured to perform functions of a central unit (CU), cause the electronic device to:
receive, through a transceiver, a message indicating a downlink data delivery status from a distributed unit (DU) connected with the CU,
determine, based on the message, a probability that an explicit congestion notification (ECN) field is to be displayed as a designated value indicating congestion, and
perform a marking for an ECN filed of at least one packet among packets transmitted from the CU to the DU with the designated value, according to the probability.
